# EUROPEAN PATENT APPLICATION

(11) **EP 3 848 139 A1**
(43) Date of publication of application: **14.07.2021**
(21) Application number: 20150654.0
(22) Date of filing: 08.01.2020
(51) Int. Cl.: B23B 41/00, B23B 47/30, B25H 1/00, B23Q 5/04

(54) **DRILLING APPARATUS AND METHOD FOR DRILLING HOLES INTO DISCS OF A ROTOR**

(71) Applicant: Siemens Aktiengesellschaft, 80333 München (DE)
(72) Inventor: Topic, Pavel, 763 19, Kasava (CZ)

(57) **Abstract**

Drilling apparatus and method for drilling holes into discs of a rotor.

The present invention relates to a drilling apparatus (100) for drilling holes into discs (401, 403) of a rotor (400), wherein the drilling apparatus (100) comprises a tool interface (101), an angle gear (103), a drill (105), and an adjustment unit (107), wherein the adjustment unit (107) comprises at least one adjustment element (109) for adjusting a length of the adjustment unit (107) between a first length and at least one second length in order to lock the adjustment unit (107) between two discs (401, 403) of the rotor (400) or to release the adjustment unit (107) from a position locked between two discs (401, 403) of the rotor (400), wherein the angle gear (103) transmits a rotational movement from the tool interface (101) to the drill (105), and wherein the tool interface (101) is arranged distant from the drill (105) for connecting with a drilling machine in an environment of the rotor (400).

Further, the present invention relates to a method (600) for drilling holes into discs (401, 403) of a rotor (400).

## Description

### Background

Rotors as used in turbines, for example, comprise a drive unit and a plurality of discs arranged on the drive unit. The discs are provided with holes that are used as roots for receiving so-called "fingers", i.e. securing elements for connecting blades with the discs, for example.

Since the discs of a rotor are arranged very close to each other on the drive unit, a space for installing a tool for drilling holes in a particular disc is very limited by the neighbor discs flanking the particular disc.

To provide holes in the discs of a rotor, related prior art is based on using an extra long drilling tool, wherein the drilling tool is brought into contact with a disc through a hole with a relatively large diameter in a previous disc. Thus, the drilling tool is moved in parallel to the drive unit of the rotor and moved through a plurality of discs. However, this approach is very limited in the number of discs to be drilled.

Against this background it is an object of the present invention to provide for a possibility to drill a number of holes in all discs of a rotor in a fast and ergonomic way, wherein all holes have the same diameter.

This object is solved by the subject-matter of the claims. In particular, this object is solved by a drilling apparatus and a method for drilling holes into discs of a rotor according to the independent claims. Further details of the invention unfold from the other claims as well as the description and the drawings. Thereby, the features and details described in connection with the drilling apparatus apply in connection with the method for drilling holes into discs of a rotor, so that the disclosure of the individual aspects of the invention can be referred to one another.

According to a first aspect of the invention, the above described object is solved by a drilling apparatus for drilling holes into discs of a rotor. The drilling apparatus comprises a tool interface, an angle gear, a drill, and an adjustment unit. The adjustment unit comprises at least one adjustment element for adjusting a length of the adjustment unit between a first length and at least one second length in order to lock the adjustment unit between two discs of the rotor or to release the adjustment unit from a position locked between two discs of the rotor. The angle gear transmits a rotational movement from the tool interface to the drill, and the tool interface is arranged distant from the drill for connecting with a drilling machine in an environment of the rotor.

In the context of the present invention a tool interface is an interface for a connecting the drilling apparatus described herein to a tool, such as drilling machine. In particular, the tool interface is configured to receive a rotational movement provided by a tool and to transmit the rotational movement via the angle gear to the drill of the drilling apparatus.

The tool interface of the drilling apparatus described herein may comprise a fastening mechanism for fastening a tool at the tool interface. Further, the tool interface may comprise at least one gearwheel that moves in response to a rotational movement provided by the drilling machine for transmission of the rotational movement to the angle gear.

In the context of the present invention, an angle gear is a device for transmitting a movement around a first axis into a movement around at least one second axis. In particular, the angle gear of the drilling apparatus described herein may be configured to transmit a movement around a first axis parallel to a drive unit of a rotor into a movement around a second axis that is orthogonal or substantially orthogonal to the first axis and further, to a third axis that is also parallel to the drive unit of the rotor and/or parallel to the drill of the drilling apparatus described herein but in another height as the first axis.

In the context of the present invention, an environment of a rotor is a space that surrounds the rotor. Thus, the rotor does not extend in the environment. In particular, an environment of a rotor is distant from a space between two discs of the rotor.

The angle gear of the drilling apparatus described herein may be a drive unit. The angle gear may comprise a number of gearwheels for contacting gearwheels of the tool interface and/or the gearwheels driving the drill.

The drilling apparatus described herein is based on an adjustment unit that can be adjusted between a first length and at least one second length in order to lock the adjustment unit between two discs of a rotor or to release the adjustment unit from a position locked between two discs of the rotor. Thus, the adjustment element is movable form the first length to the at least one second length. In particular, the first length is shorter than the at least one second length.

The second length of the adjustment unit may be a length where the adjustment contacts two discs of a rotor such that the drilling apparatus described herein is locked between the two discs in a secure way, which enables a secure and exact drilling of one of the discs using the drill of the drilling apparatus.

The first length of the adjustment unit may be a length that enables the adjustment unit to be inserted in a space, i.e. a gap between two discs of a rotor, in particular without any contact to the discs.

For adjusting the adjustment unit between the first length and the at least one second length, the drilling apparatus described herein comprises at least one adjustment element. The at least one adjustment element may be a movable object, such as a bolt or a screw, which stretches or shrinks the adjustment unit when being moved. Thus, the outer limits of the adjustment unit may increase or decrease.

According to the present invention, the tool interface is arranged distant from the drill of the drilling apparatus described herein. In particular, the tool interface is arranged in a distance from the drill that enables a tool, such as a drilling machine, to get engaged with the tool interface and to transmit a rotational movement to the tool interface. Of course, the tool interface may be engaged by a manually or an automatic driven drilling device.

In an example, the adjustment unit comprises at least one base member, wherein the at least one adjustment element is movable relative to the at least one base member for adjusting the length of the adjustment unit between the first length and the at least one second length.

By using an adjustment element that is movable relative to a base member of the adjustment unit, the length of the adjustment can be adjusted by moving the adjustment element through a bore in the base member, for example. Thus, the adjustment element moves more to the outside, i.e. in a direction of particular discs, in order to increase a length of the adjustment unit and moves more to the inside, i.e. in a direction of the drill, in order to decrease a length of the adjustment unit.

In particular, an adjustment element that can be moved relative to a base member can be used to close a gap between the adjustment unit and a particular disc. Thus, the adjustment element can be brought into contact with at least one disc in order to lock the adjustment device and the driving unit, accordingly, between two discs.

In another example, the adjustment unit comprises at least two base members that are moveable relative to each other by the at least one adjustment element.

By using an adjustment unit that comprises two base members that are moveable relative to each other, the base members can be moved in order to increase a length of the adjustment unit and to contact particular discs flanking the adjustment unit. For moving two base members, the at least one adjustment element may be a threaded rod engaging in threaded bores of the base members. Thus, by moving the adjustment element, the base members are moved with respect to the adjustment element and are brought into contact with the discs, thereby locking the adjustment unit and the drilling apparatus between the discs.

In another example, the at least one adjustment element is selected from the following list of adjustment elements: bolt, threaded rod and screw.

While a threaded rod is preferably used in combination with two movable base members, bolts and screws may be used for movement relative to a single base member.

In another example, the drilling apparatus comprises a mechanism that moves the drill relative to the adjustment unit towards a particular disc to be drilled.

In order to move the drill of the drilling apparatus described herein towards a disc to be drilled, a mechanism may be used. This mechanism may comprise at least one gearwheel travelling along at least one gear rack. The gear rack may be aligned in parallel to an axis along which the drill is travelling. The mechanism may comprise a driver, such as an actuator or a rotary wheel for moving the gearwheel of the mechanism along the gear rack, thereby providing a pressing force that presses the drill on or in a disc to be drilled.

In another example, the tool interface is arranged at a position distant along a vertical axis from the adjustment unit, wherein a rotational movement received by the tool interface is transmitted to the drill via at least two deflection points.

In order to enable a secure and precise drilling of a disc, a transmission via at least two deflection points is favorable as it enables to transmit a rotational movement provided around a first axis into a rotational movement around a second axis that is parallel to the first axis but at another height. By using the different height levels, a space for operating a drilling machine can be provided. Of course, the height between the drill and the tool interface of the drilling apparatus described herein may be adjustable by using a telescopic mechanism, for example.

In another example, the drilling apparatus further comprises an alignment element configured for aligning a contact position of the drill with a particular disc with a hole already drilled in another disc.

An alignment element for aligning the position of particular holes to be drilled with respect to each other enables to insert a straight element, such as holding "finger" in a plurality of holes drilled with the drilling apparatus described herein.

An alignment element may be a frame that can be brought into contact with a hole already drilled and that extends to a following disc in order to mark a position of the hole to be drilled. The frame may be movable between a marking position and a drilling position. Additionally or alternatively, the frame may comprise an opening for the drill.

In another example, the adjustment unit comprises at least one contact element for contacting a disc.

A contact interface may be an end portion of an adjustment element that is configured to contact a disc and to provide a clamping force to lock the drilling apparatus between two discs. Additionally or alternatively, a contact interface may be a structure provided at a base member or at an end portion of an adjustment element that is configured to contact a disc and to provide a clamping force to lock the drilling apparatus between two discs. A contact interface may be made from rubber and/or any other elastic material in order to maximize a contact surface between a particular disc and the contact interface. A contact interface may have a shape that maximizes a contact surface between a particular disc and the contact interface, such a cylindrical shape for example.

Further, a contact interface may be configured to avoid damage of a disc to be contacted by using elastic materials, for example.

In a second aspect, the present invention relates to a method for drilling holes into discs of a rotor. The method comprises a providing step for providing an embodiment of the drilling apparatus disclosed herein in a gap between two discs of a rotor while the length of the adjustment unit is adjusted to the first length, a first adjustment step for moving the adjustment element to adjust the adjustment unit to the second length for locking the adjustment unit between the two discs, a drilling step for drilling at least one hole in at least one of the two discs, a second adjustment step for adjusting the adjustment element to shrink the adjustment unit to the first length for unlocking the adjustment unit from the two discs, and a removing step for removing the drilling apparatus from the rotor.

The method described herein in particular serves for providing holes in discs of a rotor using the drilling apparatus described herein, such that with respect to the advantages of the method described herein, reference is made to the advantages described with respect to the drilling apparatus.

In an example, the method further comprises aligning a position of a contact position of the drill with a particular disc with a hole already drilled in another disc.

Further advantages, features and details of the invention unfold from the following description, in which embodiments of the present invention are described in detail. Thereby, the features from the claims as well as the features mentioned in the description can be relevant for the invention as taken alone or in an arbitrary combination. In the drawings, there is schematically shown:
FIG. 1 a drilling apparatus according to an embodiment,
Fig. 2 the drilling apparatus shown in Fig. 1 in a first side view,
Fig. 3 the drilling apparatus shown in Fig. 1 in a second side view,
Fig. 4 the drilling apparatus shown in Fig. 1 arranged between two discs of a rotor,
Fig. 5 a detailed view of an angle gear, a tool interface and a drill, according to an embodiment,
Fig. 6 a method according to an embodiment.

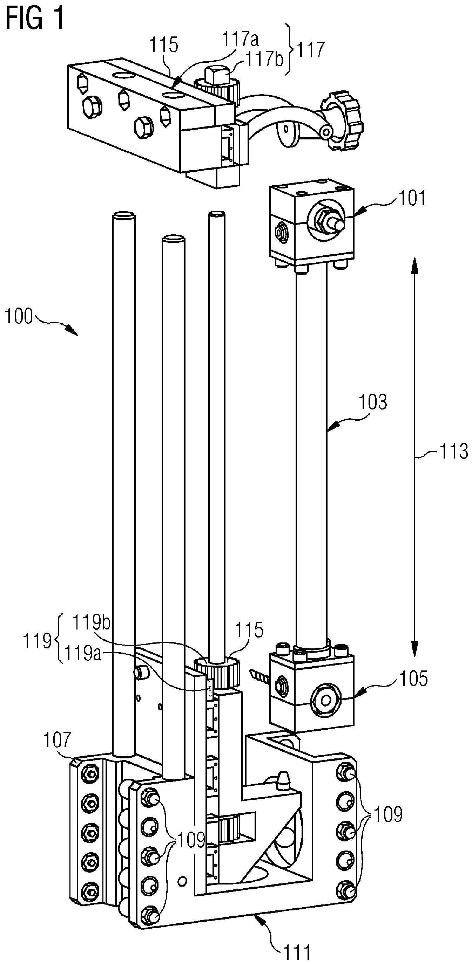

In Fig. 1, a drilling apparatus 100 is shown. The drilling apparatus 100 comprises a tool interface 101, an angle gear 103, a drill 105, and an adjustment unit 107.

The adjustment unit 107 comprises a number of adjustment elements 109 that can be moved relative to a base member 111 of the adjustment unit 107.

The adjustment elements 109 can be moved in a first direction towards the drill 105 in order to shrink the adjustment unit 107 to a first length, i.e. to limit the size of the drilling apparatus 100.

Further, the adjustment elements 109 can be moved in a second direction opposite the first direction in order to stretch the adjustment unit 107 to a second length, i.e. to enhance the size of the drilling apparatus 100.

While being adjusted to the first length, the adjustment unit 107 can be installed in a gap between two discs of a rotor.

By adjusting the adjustment unit 107 to the second length, the adjustment unit 107, in particular the adjustment elements 109 can be brought into contact with the discs, such that a clamping force is provided that fixates the adjustment unit 107 between the two discs. Thus, the drill 105 can be used to provide a borehole at a precise position on one of the two discs in a secure way.

By bringing the adjustment unit 107 back to the first length, the drilling apparatus 100 can be removed from the two discs.

The drill 105 is driven by a drilling machine (not shown in Fig. 1). The drilling machine provides a rotational movement to the tool interface 101. The tool interface 101 transmits the rotational movement to the angle gear 103, which transmits the rotational movement to the drill 105.

For transmission of the rotational movement from the drilling machine to the drill 105, the tool interface 101, the angle gear 103 and the drill 105 may comprise a number of gearwheels that are brought into engagement with each other.

Since the tool interface 101 is located distant from the drill 105, as indicated by arrow 113, the distance between the tool interface 101 and the drill 105 provides a space for operating the drilling machine. The distance between the tool interface 101 and the drill 105 may be adapted by using an angle gear 103 of a particular length or a telescopic mechanism.

For moving the drill 105 towards the disc to be drilled, the drilling apparatus 100 may comprise an optional mechanism 115.

The mechanism 115 may have an upper part 117 comprising an upper gear rack 117a, which may be arranged at a fixation mechanism 119 for fixation of the drilling machine at the tool interface 101 and an upper gear wheel 117b for travelling along the upper gear rack 117a, thereby moving the tool interface 101 along a drilling axis.

Further, the mechanism 115 may comprise a lower part 119 comprising a lower gear rack 119a, which may be arranged at a rod 121 on which the drill 105 travels along the drilling axis as a lower gear wheel 119b of the lower part 119 moves along the lower gear rack 119a.

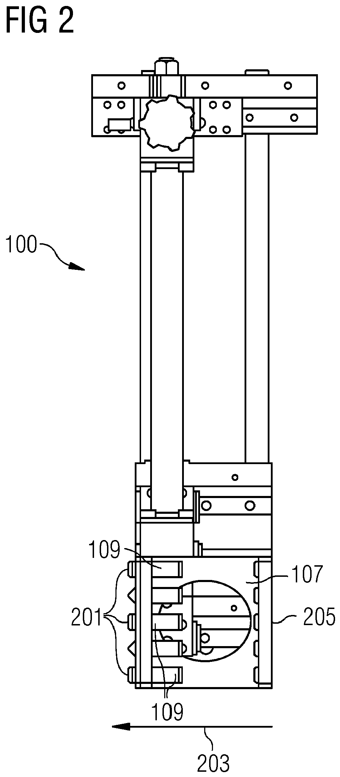

In Fig. 2 the drilling apparatus 100 is shown in a first side view. Here, the adjustment elements 109 are show in detail.

As can be seen in Fig. 2, the adjustment elements 109 comprise a contact interface 201 for contacting particular discs flanking the drilling apparatus 100. By moving the adjustment elements 109 in a first direction, as indicated by arrow 203, the adjustment elements 109 can be brought into contact with a particular disc and the drilling apparatus 100. In particular, a plane side 205 of the adjustment unit 107 can be brought into contact with a corresponding second disc to lock the drilling apparatus 100 between the two discs.

In Fig. 2, the adjustment unit 107 is shown with a first length, i.e. in a compact arrangement that allows the adjustment unit 107 to be installed in a gap between two discs of a rotor. The first length may be between 20cm and 5cm. In particular, the first length may be 9cm. However, the first length may be any length that allows to install the adjustment unit 107 in a gap between two discs of a rotor to be drilled.

By moving the adjustment elements 109 in the first direction, the length of the adjustment unit 107 changes from the first length to the second length, which may be chosen dynamically, depending on the particular gap where the adjustment unit 107 is to be installed. For example, the second length may be between 6cm and 30cm. In particular, the second length may be 10cm.

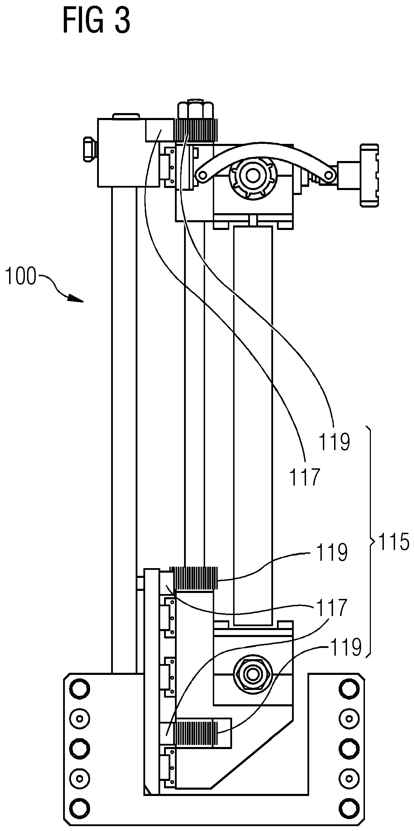

In Fig. 3 the drilling apparatus 100 is shown in a second side view. Here, the mechanism 115 for moving the drill 115 is shown in detail. The mechanism 115 comprises a number of gear racks 117 and a number of gear wheels 119 that travel along the gear racks 117. The mechanism 115 may be automatically driven by an actuator or manually driven by a handwheel, for example.

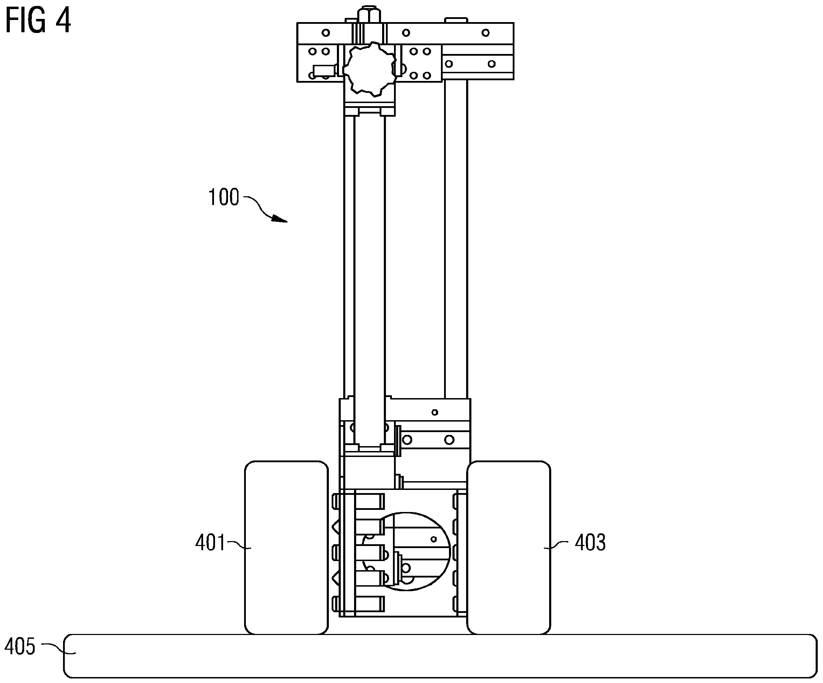

In Fig. 4, the drilling apparatus 100 is shown in a position arranged between a first disc 401 and a second disc 403 of a rotor 405. Thus, the adjustment unit 107 is adjusted to its second length and the adjustment unit 107 is locked between the first disc 401 and the second disc 403. Thus, the adjustment unit 107 is brought into contact with the first disc 401 and the second disc 403 to provide for a clamping force that fixates the drilling apparatus 100 relative to the first disc 401 and the second disc 403.

By adjusting the adjustment unit 107 to its first length, the adjustment unit 107 is shrinked, the contact between the adjustment unit 107, the first disc 401 and the second disc 403 is released and the drilling apparatus 100 can be removed from the rotor 405.

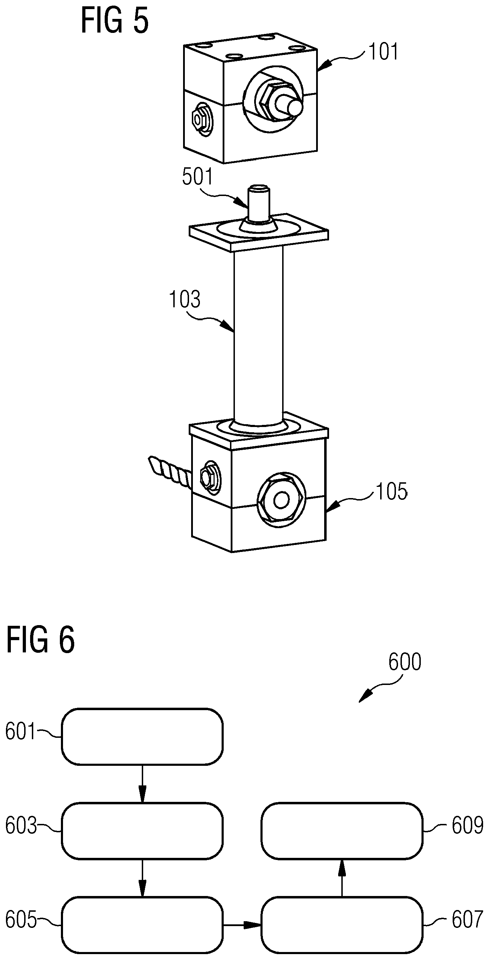

In Fig. 5, the tool interface 101, the angle gear 103 and the drill 105 are shown in detail. The tool interface 101, the angle gear 103 and the drill 105 may be connected using conical gears 501. In particular, the angle gear 103 may be configured to transmit a rotational movement around a first axis pointing in a first direction, provided by the tool interface 101 to the drill 105 pointing in a second direction opposite from the first direction.

In Fig. 6 a method 600 is shown. The method 600 comprises an installation step 601 for installing the drilling apparatus 100 as shown in Fig. 1, for example, between two discs of a rotor while the length of the adjustment unit 107 is adjusted to the first length, a first adjustment step 603 for moving the adjustment element 109 to adjust the adjustment unit to the second length for locking the adjustment unit between the two discs, a drilling step 605 for drilling at least one hole in at least one of the two discs, a second adjustment step 607 for moving the adjustment element 109 to adjust the adjustment unit 107 to the first length for unlocking the adjustment unit 107 from the two discs, and a removing step 609 for removing the drilling apparatus 100 from the rotor.

## Claims

1. Drilling apparatus (100) for drilling holes into discs (401, 403) of a rotor (400),
wherein the drilling apparatus (100) comprises:
- a tool interface (101),
- an angle gear (103),
- a drill (105), and
- an adjustment unit (107),
wherein the adjustment unit (107) comprises at least one adjustment element (109) for adjusting a length of the adjustment unit (107) between a first length and at least one second length in order to lock the adjustment unit (107) between two discs (401, 403) of the rotor (400) or to release the adjustment unit (107) from a position locked between two discs (401, 403) of the rotor (400),
wherein the angle gear (103) transmits a rotational movement from the tool interface (101) to the drill (105), and
wherein the tool interface (101) is arranged distant from the drill (105) for connecting with a drilling machine in an environment of the rotor (400).

2. Drilling apparatus (100) according to claim 1,
wherein the adjustment unit (107) comprises at least one base member (111), and wherein the at least one adjustment element (107) is movable relative to the at least one base member (111) for adjusting the length of the adjustment unit (107) between the first length and the at least one second length.

3. Drilling apparatus (100) according to claim 1 or 2,
wherein the adjustment unit (107) comprises at least two base members (111) that are moveable relative to each other by the at least one adjustment element (109).

4. Drilling apparatus (100) according to any of the preceding claims,
wherein the at least one adjustment element (107) is selected from the following list of adjustment elements (107): bolt, threaded rod and screw.

5. Drilling apparatus (100) according to any of the preceding claims,
wherein the drilling apparatus (100) comprises a mechanism (115) that moves the drill (105) relative to the adjustment unit (107) towards a particular disc (401, 403) to be drilled.

6. Drilling apparatus (100) according to any of the preceding claims,
wherein the tool interface (101) is arranged at a position distant in a vertical axis from the adjustment unit (107) and
wherein a rotational movement received by the tool interface (101) is transmitted to the drill (105) via at least two deflection points.

7. Drilling apparatus (100) according to any of the preceding claims,
wherein the drilling apparatus (100) further comprises an alignment element configured for aligning a contact position of the drill (105) and a particular disc (401, 403) with a hole already drilled in another disc (401, 403).

8. Drilling apparatus (100) according to any of the preceding claims,
wherein adjustment unit (107) comprises at least one contact interface (201) for contacting a disc (401, 403).

9. Method (600) for drilling holes into discs (401, 403) of a rotor (400),
the method (600) comprising the following steps:
- providing (601) a drilling apparatus (100) according to any of claims 1 to 8 between two discs of the rotor (400) while the length of the adjustment unit (107) is the first length,
- moving (603) the adjustment element (109) to adjust the adjustment unit (107) to the second length for locking the adjustment unit (107) between the two discs (401, 403),
- drilling (605) at least one hole in at least one of the two discs (401, 403),
- moving (607) the adjustment element (109) to adjust the adjustment unit (107) to the first length for unlocking the adjustment unit (107) from the two discs (401, 403),
- removing (609) the drilling apparatus (100) from the rotor (400).

10. The method (600) according to claim 9,
wherein the method (600) further comprises:
- aligning a position of a contact position of the drill (105) with a particular disc (401, 403) with a hole already drilled in another disc (401, 403).
